# EUROPEAN PATENT APPLICATION

(11) **EP 2 913 025 A1**
(43) Date of publication of application: **02.09.2015**
(21) Application number: 14000697.4
(22) Date of filing: 27.02.2014
(51) Int. Cl.: A61C 13/107, A61C 13/34, A61C 13/00

(54) **Denture production**

(71) Applicant: Precision Smiles Pty. Ltd., Highett, VIC 3190 (AU)
(72) Inventor: Czech, Peter George, Victoria, 3190 (AU)
(74) Representative: Flosdorff, Jürgen

(57) **Abstract**

A process for making false teeth for patients with existing dentures which firstly scans the existing dentures and makes a 3D copy in polymer. At least some of the teeth are replaced to improve their operation and/or appearance. The improved copy is transferred to an articulator where the bite is adjusted and when the patient is satisfied the improved copy is reproduced by known methods such as casting. The 3D scanning step utilises a modified turntable which suspends the dentures suitably while the camera compiles images. The process reduces the number of patient appointments and generates records from which replacements can be built.

## Description

### TECHNICAL FIELD

This invention concerns both small scale and large scale manufacture of false teeth as full and partial dentures, as single units or complete maxillary and mandibular denture units.

### BACKGROUND

The provision of these dental items is not difficult despite their complex shape but customising them to give a comfortable fit which is acceptable to the dental patient requires multiple patient appointments and this slows the procedure. Currently patients are able to choose from the many types of individual teeth which are available in order to achieve pleasing appearance.

Whereas dental technicians tend to rely on making a female mould of the dental item in order to cast a denture by long established casting methods, the availability of 3D prototyping machines which build up components from 3D scans of an existing target component, shorten the manufacturing sequence. However the reception of the denture into the patient's mouth is still the final test for the product and individual fit and patient satisfaction is still the economic test for the denture.

A high success rate depends upon several attendances by the patient at the premises of either the dentist/dental prosthetists or the dental laboratory to ensure that at each stage the fit is comfortable and the appearance is satisfactory. This imposes a multi-step procedure requiring appointments and generating accompanying costs.

### SUMMARY OF INVENTION

The method aspect of the invention comprises the steps of making a copy of the patients denture by a rapid prototyping sequence in a polymeric material suitable for such processes replacing some or all of the teeth of the copy with artificial teeth, adjusting the bite by reference to the recipient, adjusting the shape if necessary and reproducing the adjusted copy by known methods.

Casting methods such as lost-wax casting are satisfactory. Should dental casting be replaced by a prototyping method utilising printing in acrylic polymer or other suitable material which can be placed directly in the mouth after printing, this too will be acceptable.

The initial steps of the method involves rotating a denture on a turntable in order to scan the surface thereof, collecting the data from the scan and directing the data to a fabricator in order to build a polymeric copy of the denture. These steps don't require the cooperation of the patient. Loan of the denture is all that is required. They may be conducted in a shop type of environment such as in a shopping centre whereas the technicians work, namely the substitution of selected teeth and the final casting of the denture using lost wax, is suited to a dental laboratory, to which the dentist and patient may have access. It is more likely with such a simplified procedure that patients journeys can be reduced in number. Courier transport suffices to circulate the dentures between laboratory and dentist/dental prosthetists.

### Advantageous Effects of Invention

1. Fewer patient appointments are necessary with consequent cost saving by reduction in time and material cost.
2. Reduced environmental wastage in terms of water, energy and CO2 emissions.
3. A comfortable fit is more likely because the original comfortable fit can be reproduced.
4. Data can be retained enabling spare or replacement dentures to be made with very minimal patient participation, as well as potential use as emergency spare dentures. After a new denture is made it is possible to scan the new denture and keep the 3D scan for future reference. So in an emergency situation where the denture is lost, a duplicate may be printed and a new denture may be made within one or two appointments. This would also be the case for when a new denture is required to be made that has not been lost.
5. No primary impressions are required which patients often dislike.
6. Reduced patient return appointments for adjustments due to more likely comfortable fit. There is also easier adaption to the new dentures as they are similar to the patients' previous dentures that they have sometimes been wearing for extended periods of time (ie. 10-20 years).

### BRIEF DESCRIPTION OF DRAWINGS

One embodiment of the invention is now described with reference to the accompanying drawings, in which:
Figure 1 is a diagram of apparatus for fabricating copies of dentures.
Figure 2 is a perspective of a turntable for presenting a set of upper and lower dentures to a scanner.
Figure 3 is a side view of the fabricated upper and lower copies on plastic bases mounted in an articulator.
Figure 4 is a front view of the copy dentures closed together after a plaster base has been added to both being measured by calipers.
Figure 5 is the same front view as Figure 4 in which an incisor has been removed in order to create a gap for a selected replacement incisor.
Figure 6 is the same front view as Figure 5 in which the replacement incision is in position.

### DESCRIPTION OF EMBODIMENTS

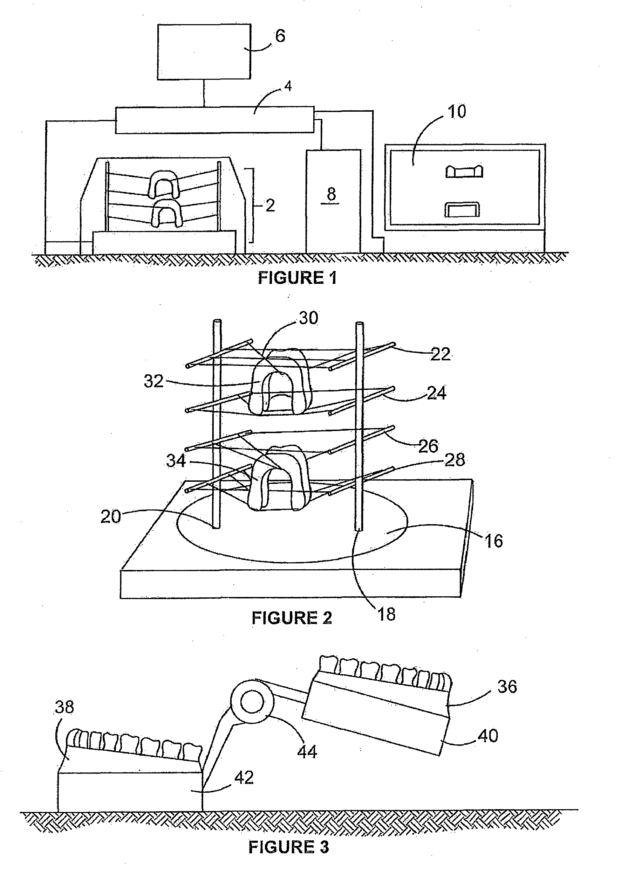

Referring to the drawings, the procedure begins by a patient bringing one or two suitable existing dentures or a recently constructed denture which they want duplicated or amended. Predominantly dentures which have been in use for a long enough period that the gums and sub-mucosal bone has moulded to the shape of the denture. Each denture is cleaned, prepared and mounted for 3D scanning in the apparatus shown in Figure 1. A one or two dimensional turntable 3D scanner 2 (NextEngine™ HD) supplies data to software which instructs computer 4 and sends data to memory 6. A software program (not particularly the same software as used to scan) in turn instructs fabricator 8. The latter is an industrial prototyping machine capable of reproducing a denture copy made of a Acrylonitrile Butadiene Styrene (ABS) Co-Polymer or any suitable thermo plastic polymer or resin (or a wider range of materials including dental acrylics) which is intended to be temporary only, or in the case of printing in acrylic, a more permanent fixture. Screen 10 shows the operator the purpose of the scanning operation.

In Figure 2 the turntable 16 has a pair of parallel upright posts 18, 20, each of which has four pairs of crossbars 22, 24, 26, 28. The height of the crossbars is adjustable by pinch screws (not shown). Transparent polyester filaments 30 are threaded between corresponding pairs of crossbars to enable the operator to suspend a pair of dentures 32, 34 in the path of the scanner's laser beam. The operator is able to follow the build of the image on the screen 10. When the two images are satisfactory, the computer instructs the fabricator 8 to print a copy of each denture in ABS copolymer and records the data for future use. The copying of the denture ensures that the temporary copy reproduces the dimensions which already suit the patient. These printed copies may be sent prematurely back to the operator, eg. Dentist/Prosthetist, to take a new centric registration, or use a gothic-arch tracer on the printed teeth to achieve an even more precise centric registration. This gothic-arch tracer design may be an amendment to this patent in future. It is possible to also re-estimate new dimensions and draw or mark the printed dentures once they have been in the mouth raw, before teeth replacement has begun.

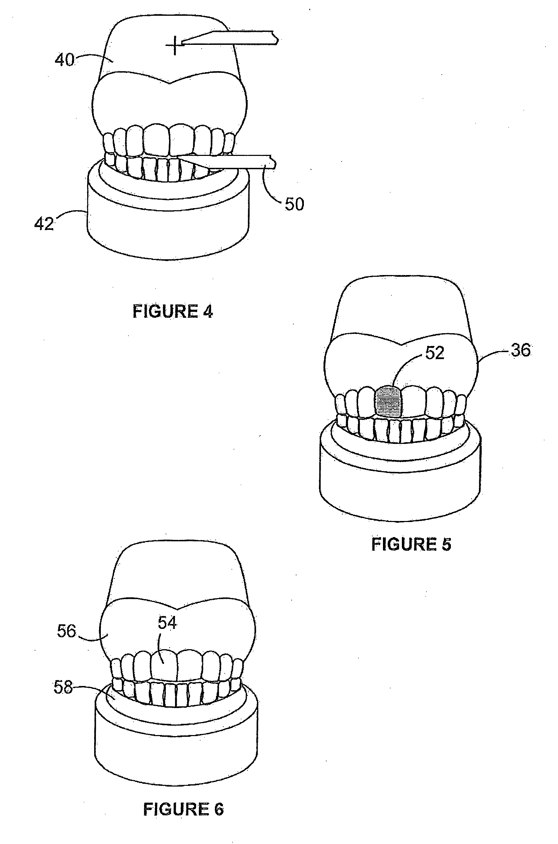

In Figure 3 the upper and lower copies 36, 38 are superimposed in order to inspect the accuracy of the reproduction. A plaster base 40, 42 is then fixed to each of the copies. The copies are then superimposed and held together using sticky wax or dental adhesive and placed in an articulator 44. The articulator is actuated and a coping saw is used to mark each plaster base 40, 42 with a centre line kerf 46 (see Figure 4).

In Figure 4 the heights of the upper anterior teeth are measured around the curve of the plaster base 40 using calipers 50 for future reference. The total vertical dimensions of the upper and lower copies are marked. The vertical dimension also known as the "vertical dimension of occlusion (VDO)" is the distance from the occlusal surface of the teeth to the alveolar ridge or to a point marked on the dental articulator. It is used to record the "height" of the teeth or in layman's terms the distance from the teeth's edge to the lips.

In Figures 5 and 6, a gap 52 is created in the upper denture copy 36 by using a dental hand piece, lathe stone or coping saw. The gap is made slightly larger than the selected artificial tooth 54 which is to be accommodated in the gap. The gap is then coated with softened dental paraffin wax to which the incoming tooth adheres. Like gaps are created and filled on each prototype tooth with selected teeth until the copy becomes a hybrid of polymer, wax and acrylic teeth. A standard 'wax up' procedure follows when all teeth have been set up to make the denture presentable to the patient. These teeth may be changed in position if the operator has given instruction to do so, thereby adjusting height, length or mid-line of the acrylic teeth or move them buccally or lingually as well. There may be consecutive appointments if further checking is required.

The plaster bases are then removed and the hybrid copies 56, 58 are ready to present to the patient for a trial fit. At this stage the bite is checked through the standard procedure of using bite wax to record the patients bite and removing the two dentures stuck together as one. The plaster bases 40, 42 are removed from the articulator, re-set into the dentures and re-articulated. This is all standard denture making procedure. The acrylic teeth are then all adjusted in accordance to any changes in the bite given by the patient, re-waxed to be presentable and tried again chair side with the patient until it is evident that the correct bite has been achieved. This repetition of adjusting the teeth to suit the new bite is also standard procedure. These procedures are all performed on the duplicate printed bases from the original scan or subsequent scans. Once the patient and dentist/dental prosthetists is satisfied with the bite and appearance of the dentures, a zinc oxide paste or other form of suitable material is applied to the tissue fitting surface of the printed denture to create a female mould, in a similar fashion to when a denture is relined.

The procedures for setting up teeth as described above is set out in *Dental Laboratory Technology: Prosthodentic Techniques* ©1968 by the University of North Carolina.

Thereafter the steps to make the dentures from polymethyl methacrylate in a dental laboratory are according to established practice. Those produce pink gum areas adjacent to white teeth.

If the patent has a single denture only the procedure is as follows. The single denture is printed and duplicated. An impression of the opposing natural teeth is taken. The printed denture is then articulated with the plaster model of the opposing teeth. The same tooth replacement procedure is conducted as in a normal DDS system. But the acrylic posterior teeth touch the plastic posterior teeth and articulate together.

It is to be understood that the word "comprising" as used throughout the specification is to be interpreted in its inclusive form, ie. use of the word "comprising" does not exclude the addition of other elements.

It is to be understood that various modifications of and/or additions to the invention can be made without departing from the basic nature of the invention. These modifications and/or additions are therefore considered to fall within the scope of the invention.

## Claims

1. A method of modifying the copy of a patient's denture which has been made by a rapid prototyping sequence comprising the steps of mounting the copy on a plaster base, removing one or more teeth and replacing them with selected teeth fixed to the copy by adhesive, removing the modified copy from the plastic base, applying bite wax to the fitting surface of the modified copy, allowing the patient to bite the modified copy and when the wax has hardened, preparing a final copy in dental acrylic polymer by known methods.

2. A method as claimed in Claim 1, wherein the plaster bases and attached copies of both upper and lower dentures are transferred to an articulator and the bite position in the articulator is recorded.

3. A method as claimed in Claim 1 or 2, wherein a tooth is removed from the copy and a replacement tooth is attached to the copy.

4. A method as claimed in Claim 1 or 2, wherein multiple teeth are removed from the copy and replacement teeth are attached to the copy.

5. A method as claimed in any one of Claims 2-4, wherein the heights of the upper anterior teeth around the curve of the plaster base are measured to determine the vertical dimension of occlusion.

6. A method as claimed in any one of Claims 1-5, wherein the copy is prepared by scanning the patient's partial denture or full denture and supplying the scanning data to a 3D printer capable of reproducing a polymeric copy.

7. A method as claimed in Claim 6, wherein the upper and lower dentures are scanned together in the same scanner.

8. Apparatus for exposing a patient's denture to a scanning beam comprising a turntable, a pair of supports extending uprightly from the perimeter of the table, each support having means to suspend a group of filaments above the turntable, whereby the dentures can be hung in the path of the scanner beam.

9. Apparatus as claimed in Claim 8, wherein the means to suspend the filaments further comprises a pair of crossbars, one on each support spanned by the filaments.

10. Apparatus as claimed in Claim 9, wherein the supports have an upper pair of crossbars and a lower pair of crossbars, whereby the dentures are spatially separable.

11. Apparatus as claimed in any one of Claims 8-10, wherein the height of the crossbars is adjustable.

12. Denture copies made of mixed dental materials when made by any one of method Claims 1-7.

13. Dentures for wearing by a patient when made of dental acrylic polymer from a denture copy as claimed in Claim 12.
